# EUROPEAN PATENT SPECIFICATION

(11) **EP 2 785 016 B1**
(45) Date of publication and mention of the grant of the patent: **15.08.2018**
(21) Application number: 13305385.0
(22) Date of filing: 28.03.2013
(51) Int. Cl.: H04L 29/08, H04L 12/24

(54) **A system for modifying the contexts of applications as a function of future scheduled events**
System zur Modifizierung der Kontexte von Anwendungen als eine Funktion von künftigen geplanten Ereignissen
Système permettant de modifier les contextes d'applications en tant que fonction de futurs événements programmés

(43) Date of publication of application: 01.10.2014
(73) Proprietor: Alcatel Lucent, 91620 Nozay (FR)
(72) Inventor: Abou-Chakra, Rabih, 92707 COLOMBES (FR); Leroy, Jean François, 29806 BREST (FR)
(74) Representative: Berthier, Karine

(56) References cited:
- EP-A2- 0 954 193
- Www Smartphoneware ET AL: "User Guide Best Profiles User Guide Contents", , 18 October 2007 (2007-10-18), XP055086139, Retrieved from the Internet: URL:http://www.smartphoneware.com/download /profiles60_3/bestprofiles_for_s60_3rd_edi tion.pdf [retrieved on 2013-10-30]

## Description

### BACKGROUND OF THE INVENTION

### Field of the invention

The present invention generally relates to the usage of mobile terminals such as smartphones and personal computers, by employees of an enterprise. More peculiarly it relates to the updating of application contexts via a mobile terminal.

The employees of an enterprise use applications that are running in their respective terminals (personal computers, smartphones, etc), and applications that are running on servers connected to the enterprise network. For instance:
- A user can use a calculator application running in a smartphone for converting prices with an appropriate currency exchange rate when the user is travelling abroad.
- A user can use a navigator application running in a smartphone for consulting a map.
- A user can use an e-mail application running on an e-mail server, for receiving or sending messages.
- A user can use an enterprise call server to set up call forwarding to another's employee phone terminal when the user is leaving for vacations or travelling for business.

The respective contexts of these applications generally need to be updated as a function of current events concerning the user of these applications. For instance:
- The context of a calculator application needs to be updated by memorizing a new currency exchange rate in the mobile terminal when the user is leaving for a new travel abroad. This updating may be done manually, the user keying in the currency exchange rate into his/her mobile terminal; or may be done by triggering the download of the currency exchange rate from a specialized web site to the mobile terminal.
- The context of a navigator application may be updated by memorizing a new map in the mobile terminal when the user is leaving for a new travel abroad. This new map is downloaded from a web site to the user's mobile terminal when the user triggers the download.

In some cases, the user can even need to download additional applications that are useful for such or such country.

An enterprise telecommunication network generally comprises a calendar server centralizing calendar information: All the employees of the enterprise can register future events, which generally are their scheduled tasks, in the calendar server. Each event is represented by an event description comprising the date, hour, location, and miscellaneous details of this event. The contexts of some applications can be automatically updated as functions of the events memorized in a calendar, at the time when the event occurs. For instance, the document EP 0954193 describes an apparatus that checks a database for a calendar corresponding to the user of a phone terminal, upon receipt of a phone call. It determines the user's location as a function of the description of an event scheduled at the time when the call is incoming. The call is automatically forwarded to a terminal chosen as a function of the user's location found in the event description.

The updating of application contexts as a function of scheduled events often implies a heavy data transfer via the concerned user's terminal. Downloading additional applications may also imply a heavy data transfer. A heavy data transfer may be costly if it is made via a public mobile telecommunication network. When the user's terminal is mobile but remains inside the premises of the enterprise, it is directly connected to the enterprise telecommunication network. It can access any server at low cost, whenever the user gives an order to update the context of an application.

When the user's terminal is mobile and is outside the premises of the enterprise, it cannot be directly connected to the enterprise telecommunication network, for updating the context of an application. This terminal can still access enterprise servers and public servers via a public mobile telecommunication network, if the terminal comprises means for accessing a data transmission mobile network. However data transmission via a data transmission mobile network is expensive, peculiarly when the user is travelling in a foreign country.

As an example, consider a user that has registered a meeting in Jakarta in the calendar since a couple of weeks. But the user has forgotten to modify the contexts of the applications he/she uses, before leaving. After arriving in Indonesia, the user must do all what he/she forgot to do before leaving:
- Change statuses: presence, or out of office, or out of home.
- Set up messages indicating his/her absence.
- Set up call forwarding options.
- Change the time zone in the calendar application, for the period of the travel, in case someone wants to setup a meeting or a conference call in that period.
- Add a new city to the weather forecast list.
- Download regional maps.
- Add the local currency and its currency exchange rate.
- Add local emergency numbers and other useful numbers (Police, Hospital, Embassy ...) inside his/her directory.
- Download regulations applicable in the country.

When the user arrives in Jakarta, he/she must activate a very costly data roaming service to get remote access to the enterprise servers and public servers, in order to update the contexts of applications running on the terminal and the context of applications running on servers, so as to adapt them to the stay in Jakarta.

### Description of the prior art

Best existing solutions are based on on-the-spot determined location and calendar services embedded on the mobile device. These embedded services detect the current location of the terminal and they can alert the user and/or automatically update application contexts. However they need to receive some data. They act too late; i. e. the user is already disconnected from the private network of the enterprise, and is outside the home country. So the user must activate the data roaming option of the terminal, and then consume megabytes of data transfer, for instance to download local maps.

The document Www Smartphoneware ET AL:"User Guide Best Profiles User Guide Contents", 18 October 2007 (2007-10-18), XP055086139, Retrieved from the Internet:
URL:http://www.smartphoneware.com/download/profiles60_3 /bestprofiles_for_s60_3rd_edition.pdf [retrieved on 2013-10-30] The document D1 describes a method that allows automatic switching of the profiles of a GSM telephone. The profiles are predetermined modes:
- General (Default profile).
- Silent.
- Meeting.
- Outdoor.
- Pager.
- Offline.

For instance, the telephone automatically switches from the general mode to the silent mode when the user is in a meeting, or at night. A calendar stores event descriptions, and supplies them at the right dates and times. In a preliminary step, the user creates schedule rules that are calendar rules or location rules. They are stored in a kind of dictionary. Each rule is constituted of a keyword and an associated action.
Every calendar rule comprises:
- A first profile selected among the predetermined profiles.
- The day(s) of week when it has to be activated.
- The time when it has to be activated.
- The time when it has to be de-activated.
- A second profile, to be activated after the first profile has been de-activated.

Applying the calendar rules consists in comparing, at a given date and time, the description of an event scheduled for this date and time in the calendar, with the keywords stored in the dictionary: If the event description contains at least one of the stored keywords, then retrieving the action associated with the contained keyword, this action being to switch to a given profile.

For instance, the calendar contains the keyword "meeting" at a given date and time: When this date and time occur, the calendar supplies an event description that contains the keyword "meeting". The telephone detects that the keyword "meeting" is present in the event description currently supplied by the calendar. It retrieves the action associated to the keyword "meeting" in the dictionary. The retrieved action is, for instance, "Switch to the profile Silent". Then the telephone switches to the silent mode. This method cannot change the context of an application , and it operates when the schedules event occurs, that is too late.

Thus, there is a need to provide a technical solution for preventing the use of the very costly data roaming services for updating contexts of applications the user of a mobile terminal is moving.

This can be solved by applying the system according to the invention.

### SUMMARY OF THE INVENTION

The object of the invention is a system for modifying the contexts of applications as a function of future scheduled events, as defined by the independent claims. Thanks to the collaboration of: the means for detecting an event added, modified, or suppressed in a calendar storing event descriptions, the means for comparing each event description with the keywords stored in the dictionary, before the occurrence of the detected future event, and the means for sending a notification to the determined application, before the occurrence of the detected future event, the modification of the context of an application is completed well before the time when the added or modified or suppressed event actually occurs, or should have occurred.

Other features and advantages of the present invention will become more apparent from the following detailed description of embodiments of the present invention, when taken in conjunction with the accompanying drawings.

### BRIEF DESCRIPTION OF THE DRAWINGS

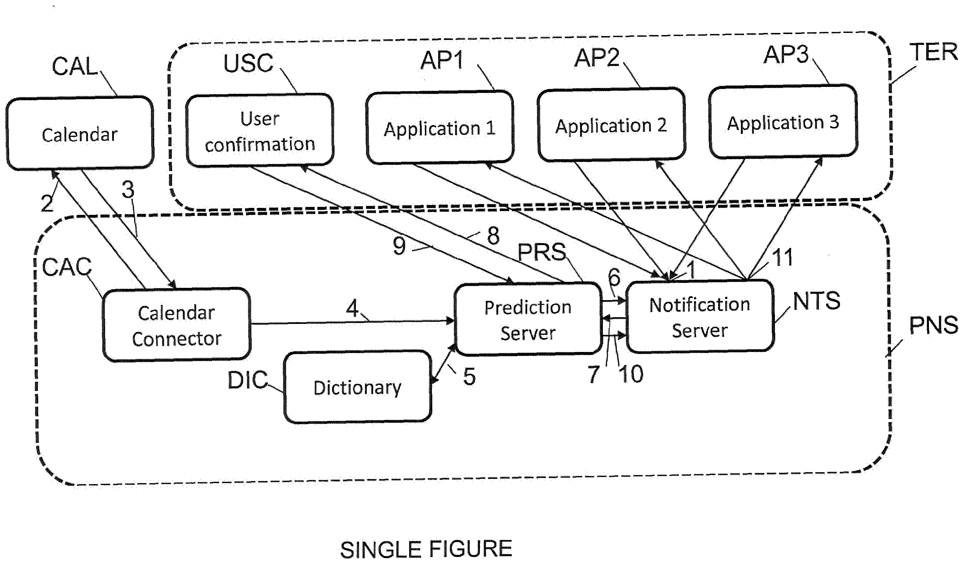

In order to illustrate in detail features and advantages of an embodiment of the present invention, the following description will be with reference to the accompanying single figure that is a block diagram showing an enterprise network comprising an exemplary embodiment of the system according to the invention

### DETAILED DESCRIPTION OF THE PREFERRED EMBODIMENTS

In the example represented on the figure, an enterprise network comprises a classical call server (not represented), and a classical calendar server CAL.

An employee is the user of a classical mobile phone terminal TER comprising:
- Applications A1, A2, A3 that respectively have contexts needing to be updated when new events are scheduled for the user of the terminal TER, in the calendar server CAL.
- A confirmation user interface USC.

In other embodiments, the confirmation user interface USC could be embedded in a calendar tool run in the terminal TER, or in a dedicated application run in the terminal TER or run in an application server somewhere in the enterprise network.

The user can also use other applications running in application servers somewhere in the enterprise network.

In this example, the embodiment PNS of the system according to the invention comprises:
- A calendar connector CAC that is an interface with the calendar server CAL for immediately detecting a future event added, modified, or suppressed in the calendar CAL, and for identifying a user concerned by the detected future event.
- A dictionary DIC memorizing keywords that can be detected in an event description; each keyword being associated to the identity AP1, AP2, AP3, etc, of an application concerned by the event, and associated to context data adapted for modifying the context of this application in order to adapt this context to the addition, modification, or suppression of said event. For instance, it memorizes country names and city names, associated with context data.
- A prediction server PRS for:
   -- Receiving, from the calendar connector CAC, the event description of each event added, or modified, or suppressed in the calendar CAL, and the identity of the concerned user.
   -- And immediately comparing each received event description with the keywords stored in the dictionary DIC and thus determining the identity of at least one application AP1, AP2, AP3, etc, and determining the data adapted for modifying the context of this application.
- A notification server NTS for immediately sending a notification to the identified application, this notification comprising the data adapted for modifying the context of this application.

In other embodiments, the notification may be differed, for instance up to the night before the scheduled event, but it is sent well before the occurrence of the detected future event to guarantee that the modification will be made before the user leaves his/her home country.

When an event is added, the data adapted for modifying the context of this application are some files to be added to the current context. The context data previously received by this application are not cancelled, as long as the corresponding event is not suppressed. When an event is suppressed the data adapted for modifying the context of this application are simply an order to delete some files in the current context.
An event can be added, modified, or suppressed in the calendar server CAL, via a calendar tool that is embedded in the terminal TER, or via any terminal connected to the enterprise network.

### Step 1:

As a preliminary step, the applications AP1, AP2, AP3, running on the terminal TER, and other applications (not represented) running on application servers accessible via this terminal TER, subscribe to the notification server NTS for receiving new context data when a future event is added, or modified, or suppressed for a user of the calendar server CAL.

### Step 2:

In this embodiment, the calendar connector CAC subscribes at the calendar server CAL so that this latter spontaneously sends it a message each time an event is added, modified, or suppressed in the calendar. In other embodiments, the prediction server PRS periodically commands the calendar connector CAC so that it makes an audit in the calendar server CAL for detecting any added, modified, or suppressed future event registered in the calendar CAL.

### Step 3:

A future event has been added, modified, or suppressed, in the calendar server CAL. This latter supplies the calendar connector CAC with:
- an indication "event added" or "event modified" or "event suppressed";
- an event description;
- and the user identity of a user concerned by this event.

### Step 4:

The calendar connector CAC forwards them to the prediction server PRS.

### Step 5:

The prediction server PRS reads keywords in the dictionary DIC and looks for these keywords in the received event description. For instance, it looks for city names in the "location" field; e.g. this latter contains "Meeting in Jakarta"; and it looks for a travel plan in the "subject" field, e.g. this latter contains "Flight Paris-Jakarta".

### Step 6:

The prediction server PRS interrogates the notification server NTS to check whether any application, has subscribed to the notification server NTS for receiving new context data when a future event is added, or modified, or suppressed for the concerned user, in the calendar server CAL.

### Step 7:

The notification server NTS answers the prediction server PRS, by supplying the identity of one or several applications that have subscribed for the concerned user, is any.

### Step 8:

If the notification server NTS answers by supplying the identity of at least one application, for the concerned user, then the prediction server PRS interrogates the user confirmation interface USC of the terminal TER of the concerned user, for each identified application.

### Step 9:

The user confirmation interface USC interrogates the user. When the user has answered, it answers to the prediction server PRS with an authorization or a rejection. The user confirmation interface USC may also comprise means for automatically answering with an authorization, if the user chose this option, so that there is no disturbance for the user.

### Step 10:

If the user has authorized the supply of an updated context to an application, the prediction server PRS commands the notification server for sending the context data to the concerned application AP1, or AP2, or AP3, etc, in the concerned terminal TER, or in a server somewhere else if the application is running on a server outside the terminal TER.

### Step 11:

The notification server NTS sends, to the concerned application AP1, or AP2, or AP3, etc, a notification carrying updated context data. Each of the notified applications updates its context in preparation of the detected future event.

The updated context can automatically modify the behavior of the application, or make the application alert the user that he/she should do some action without delay for updating the context of an application so that this application is ready well before the event occurs. For instance, an application can automatically:
- Set up telephone forwarding options.
- Change the calendar time zone for the period of the travel.
- Add a new city to a weather forecast list.
- Download regional maps.
- Add the local currency and its currency exchange rates.

An application can alert the user to do actions that might not be done automatically by the applications:
- Writing absence messages.
- Checking travel documents validity (Passport/Visa).
- Checking the bank for any credit card threshold issue for payment abroad.

Beyond updating the context of an application, the system according to the invention can even proceed to automatically search in an application store with right keywords, and then automatically download new applications that can be useful for the user of the terminal on the new spot. For this purpose:
- An embodiment of the dictionary DIC memorizes keywords that can be detected in an event description and that is associated to the identity of an application to be downloaded and to data adapted for selecting and downloading at least one application.
- An embodiment of the prediction server PRS comprises means for comparing each received event description with the keywords stored in the dictionary before the occurrence of the detected event, and thus determining the identity of at least one application to be downloaded and data adapted for selecting it in an application store and downloading it.
- And an embodiment of the notification server NTS comprises means for downloading and installing the identified application, either immediately or some time later, but well before the occurrence of the detected future event to guarantee that the downloading will be made before the user leaves his/her home country.

A computer program product can include code adapted to perform the above mentioned steps, when the computer program product is loaded into a memory and executed on a processor.

## Claims

1. A system for modifying the contexts of applications as a function of future scheduled events, comprising:
- means (PRS, CAC) for selecting (1, 2, 3) an event in a calendar server (CAL) storing event descriptions,
- a dictionary (DIC) memorizing keywords that can be detected in an event description, and actions respectively associated to the memorized keywords;
- means (PRS) for receiving (4), from the calendar (CAC), the description of the selected event;
- means (PRS) for comparing (5) each received event description with the keywords stored in the dictionary (DIC);
- and means for, if a at least one of these keywords is contained in a received event description, doing an action (6) associated to the contained keyword;
**characterized in that:**
- the dictionary (DIC) comprises means for memorizing, respectively in association with each memorized keyword, the identity (AP1, ...) of an application and data adapted for modifying the context of this application;
- the means for selecting an event in the calendar server (CAL) comprises means for detecting (1, 2, 3) a future event added, modified, or suppressed in said calendar server (CAL), before the occurrence of the detected future event;
- the means for doing an action (6) associated to the contained keyword comprise:
-- means for retrieving, in the dictionary (DIC), the identity of at least one application (AP1, ...) and the data adapted for modifying the context of this application, associated to the contained keyword;
-- and means (PRS, NTS) for sending (10, 11) notifications, before the occurrence of the detected future event, to the application the identity has been retrieved, this notification comprising the data adapted for modifying the context of this application.

2. A system according to claim 1, **characterized in that** said means (PRS, CAC) for detecting a future event added, modified, or suppressed in a calendar server (CAL) storing event descriptions, comprise means for subscribing at the calendar server (CAL) so that this latter spontaneously sends a message each time an event is added, modified, or suppressed in the calendar.

3. A system according to claim 1, **characterized in that** said means (PRS, CAC) for detecting a future event added, modified, or suppressed in a calendar server (CAL) storing event descriptions, comprise means for periodically commanding the calendar connector (CAC) so that it makes an audit in the calendar server (CAL) for detecting each added, modified, or suppressed future event registered in the calendar (CAL).

4. A system according to claim 1, **characterized in that** it further comprises:
- means (PRS) for comparing (5) each received event description with the keywords stored in the dictionary (DIC), before the occurrence of the detected future event, and thus determining the identity of at least one application to be downloaded and data adapted for selecting it in an application store, and downloading it;
- and means (NTS) for downloading and installing the identified application, before the occurrence of the detected future event.

5. A system according to claim 1, **characterized in that** it further comprises means (PRS) for interrogating (8, 9) a concerned user for confirming that this concerned user allows the modification of the context of an application, before sending (11) a notification to this application if the user has authorized the modification.

6. A digital data storage medium comprising computer-executable instructions which, when the program is run on a computer, cause the computer to perform all the method steps of:
- memorizing, in a dictionary (DIC), keywords that can be detected in an event description;
- selecting (1, 2, 3) an event in a calendar server (CAL) storing event descriptions;
- receiving (4), from the calendar (CAC), the description of the selected event;
- comparing (5) each received event description with the keywords stored in the dictionary (DIC);
- and if a received event description contains at least one of the stored keywords, doing an action (6) associated with the contained keyword; **characterized in that** these instructions further perform the steps of:
- associating, to each keyword memorized in the dictionary (DIC), the identity (AP1, ...) of an application and to data adapted for modifying the context of this application in order to adapt his context to the addition, modification, or suppression of said event;
- selecting (1, 2, 3) an event, in the calendar server (CAL), by detecting (1, 2, 3) a future event added, modified, or suppressed in said calendar server (CAL), before the occurrence of the detected future event;
- doing an action (6) associated with the contained keyword, comprises the step of:
-- retrieving the identity of at least one application (AP1, ...) and the data adapted for modifying the context of this application, associated with the contained keyword;
- and then sending (10, 11) notifications to the at least one identified application, before the occurrence of the detected event, this notification comprising the data adapted for modifying the context of this application.

7. A computer program product comprising computer-executable instructions which, when the program is run on a computer, cause the computer to perform all the method steps of:
- memorizing, in a dictionary (DIC), keywords that can be detected in an event description;
- selecting (1, 2, 3) an event in a calendar server (CAL) storing event descriptions;
- receiving (4), from the calendar (CAC), the description of the selected event;
- comparing (5) each received event description with the keywords stored in the dictionary (DIC);
- and if a received event description contains at least one of the stored keywords, doing an action (6) associated with the contained keyword;
**characterized in that** these instructions further perform the steps of:
- associating, to each keyword memorized in the dictionary (DIC), the identity (AP1, ...) of an application and to data adapted for modifying the context of this application in order to adapt his context to the addition, modification, or suppression of said event;
- selecting (1, 2, 3) an event, in the calendar server (CAL), by detecting (1, 2, 3) a future event added, modified, or suppressed in said calendar server (CAL), before the occurrence of the detected future event;
- doing an action (6) associated with the contained keyword, comprises the steps of:
-- retrieving the identity of at least one application (AP1, ...) and the data adapted for modifying the context of this application, associated with the contained keyword;
-- and then sending (10, 11) notifications to the at least one identified application, before the occurrence of the detected event, this notification comprising the data adapted for modifying the context of this application.

## Patentansprüche

1. System zum Modifizieren der Kontexte von Anwendungen in Abhängigkeit von künftigen geplanten Ereignissen, umfassend:
- Mittel (PRS, CAC) zum Auswählen (1, 2, 3) eines Ereignisses in einem Kalenderserver (CAL), der Ereignisbeschreibungen speichert,
- ein Lexikon (DIC), das Stichwörter, die in einer Ereignisbeschreibung erkannt werden können, und Aktionen speichert, die den jeweiligen gespeicherten Stichwörtern zugehörig sind;
- Mittel (PRS) zum Empfangen (4) der Beschreibung des ausgewählten Ereignisses von dem Kalender (CAC);
- Mittel (PRS) zum Vergleichen (5) jeder empfangenen Ereignisbeschreibung mit den Stichwörtern, die im Lexikon (DIC) gespeichert sind;
- und Mittel zum Ausführen einer dem enthaltenen Stichwort zugehörigen Aktion (6), wenn wenigstens eins dieser Stichwörter in einem empfangenen Ereignis enthalten ist;
**dadurch gekennzeichnet, dass:**
- das Lexikon (DIC) Mittel zum Speichern, jeweils in Zuordnung zu jedem gespeicherten Stichwort, der Identität (AP1, ...) einer Anwendung und von Daten umfasst, die zum Modifizieren des Kontexts dieser Anwendung ausgebildet sind;
- die Mittel zum Auswählen eines Ereignisses im Kalenderserver (CAL) ein Mittel zum Erkennen (1, 2, 3) eines hinzugefügten, modifizierten oder unterdrückten künftigen Ereignisses im Kalenderserver (CAL) vor dem Eintreten des erkannten künftigen Ereignisses umfassen;
- die Mittel zum Ausführen einer Aktion (6), die dem enthaltenen Stichwort zugehörig ist, umfassen:
-- Mittel zum Abrufen der Identität von wenigstens einer Anwendung (AP1, ...) und der zum Modifizieren des Kontexts dieser Anwendung ausgebildeten Daten, die dem enthaltenen Stichwort zugehörig sind, aus dem Lexikon (DIC);
-- und Mittel (PRS, NTS) zum Senden (10, 11) von Meldungen vor dem Eintreten des erkannten künftigen Ereignisses an die Anwendung, deren Identität abgerufen wurde, wobei diese Meldung die zum Modifizieren des Kontexts dieser Anwendung ausgebildeten Daten umfasst.

2. System nach Anspruch 1, **dadurch gekennzeichnet, dass** die Mittel (PRS, CAC) zum Erkennen eines hinzugefügten, modifizierten oder unterdrückten künftigen Ereignisses in einem Kalenderserver (CAL), der Ereignisbeschreibungen speichert, Mittel zum Teilnehmen an dem Kalenderserver (CAL) umfassen, so dass letzterer spontan jedes Mal dann eine Nachricht sendet, wenn ein Ereignis im Kalender hinzugefügt, modifiziert oder unterdrückt wird.

3. System nach Anspruch 1, **dadurch gekennzeichnet, dass** die Mittel (PRS, CAC) zum Erkennen eines hinzugefügten, modifizierten oder unterdrückten künftigen Ereignisses in einem Kalenderserver (CAL), der Ereignisbeschreibungen speichert, Mittel zum regelmäßigen Anweisen des Kalenderverbinders (CAC) umfassen, so dass dieser eine Prüfung im Kalenderserver (CAL) zum Erkennen jedes im Kalender (CAL) hinzugefügten, modifizierten oder unterdrückten künftigen Ereignisses durchführt.

4. System nach Anspruch 1, **dadurch gekennzeichnet, dass** es ferner umfasst:
- Mittel (PRS) zum Vergleichen (5) jeder empfangenen Ereignisbeschreibung mit den Stichwörtern, die im Lexikon (DIC) gespeichert sind, vor dem Eintreten des erkannten künftigen Ereignisses, und dadurch Bestimmen der Identität von wenigstens einer Anwendung zum Herunterladen und von Daten, die zum Auswählen derselben in einem Anwendungsgeschäft ausgebildet sind, und Herunterladen derselben;
- und Mittel (NTS) zum Herunterladen und Installieren der identifizierten Anwendung vor dem Eintreten des erkannten künftigen Ereignisses.

5. System nach Anspruch 1, **dadurch gekennzeichnet, dass** es ferner Mittel (PRS) zum Befragen (8, 9) eines betroffenen Benutzers umfasst, um zu bestätigen, dass der betroffene Benutzer die Modifikation des Kontexts einer Anwendung zulässt, bevor eine Meldung an diese Anwendung gesendet wird (11), wenn der Benutzer die Modifikation autorisiert hat.

6. Digitales Datenspeichermedium, umfassend von einem Computer ausführbare Anweisungen, die bei Ausführung des Programms auf einem Computer den Computer veranlassen, alle folgenden Verfahrensschritte durchzuführen:
- Speichern, in einem Lexikon (DIC), von Stichwörtern, die in einer Ereignisbeschreibung erkannt werden können;
- Auswählen (1, 2, 3) eines Ereignisses in einem Kalenderserver (CAL), der Ereignisbeschreibungen speichert;
- Empfangen (4) der Beschreibung des ausgewählten Ereignisses von dem Kalender (CAC);
- Vergleichen (5) jeder empfangenen Ereignisbeschreibung mit den Stichwörtern, die im Lexikon (DIC) gespeichert sind;
- und wenn eine empfangene Ereignisbeschreibung wenigstens eins der gespeicherten Stichwörter enthält, Ausführen einer Aktion (6), die dem enthaltenen Stichwort zugehörig ist;
**dadurch gekennzeichnet, dass** diese Anweisungen ferner folgende Schritte durchführen:
- Zuordnen zu jedem in dem Lexikon (DIC) gespeicherten Stichwort der Identität (AP1, ...) einer Anwendung und zu Daten, die zum Modifizieren des Kontexts dieser Anwendung ausgebildet sind, um seinen Kontext an die Hinzufügung, Modifikation oder Unterdrückung des Ereignisses anzupassen;
- Auswählen (1, 2, 3) eines Ereignisses im Kalenderserver (CAL) durch Erkennen (1, 2, 3) eines hinzugefügten, modifizierten oder unterdrückten künftigen Ereignisses im Kalenderserver (CAL) vor dem Eintreten des erkannten künftigen Ereignisses;
- Ausführen einer Aktion (6), die dem enthaltenen Stichwort zugehörig ist, was folgenden Schritt umfasst:
-- Abrufen der Identität von wenigstens einer Anwendung (AP1, ...) und der zum Modifizieren des Kontexts dieser Anwendung ausgebildeten Daten, die dem enthaltenen Stichwort zugehörig sind;
-- und dann Senden (10, 11) von Meldungen an die wenigstens eine identifizierte Anwendung vor dem Eintreten des erkannten künftigen Ereignisses, wobei die Meldung die zum Modifizieren des Kontexts dieser Anmeldung ausgebildeten Daten umfasst.

7. Computerprogrammprodukt, umfassend von einem Computer ausführbare Anweisungen, die bei Ausführung des Programms auf einem Computer den Computer veranlassen, alle folgenden Verfahrensschritte durchzuführen:
- Speichern, in einem Lexikon (DIC), von Stichwörtern, die in einer Ereignisbeschreibung erkannt werden können;
- Auswählen (1, 2, 3) eines Ereignisses in einem Kalenderserver (CAL), der Ereignisbeschreibungen speichert;
- Empfangen (4) der Beschreibung des ausgewählten Ereignisses von dem Kalender (CAC);
- Vergleichen (5) jeder empfangenen Ereignisbeschreibung mit den Stichwörtern, die im Lexikon (DIC) gespeichert sind;
- und wenn eine empfangene Ereignisbeschreibung wenigstens eins der gespeicherten Stichwörter enthält, Ausführen einer Aktion (6), die dem enthaltenen Stichwort zugehörig ist;
**dadurch gekennzeichnet, dass** diese Anweisungen ferner folgende Schritte durchführen:
- Zuordnen zu jedem in dem Lexikon (DIC) gespeicherten Stichwort der Identität (AP1, ...) einer Anwendung und zu Daten, die zum Modifizieren des Kontexts dieser Anwendung ausgebildet sind, um seinen Kontext an die Hinzufügung, Modifikation oder Unterdrückung des Ereignisses anzupassen;
- Auswählen (1, 2, 3) eines Ereignisses im Kalenderserver (CAL) durch Erkennen (1, 2, 3) eines hinzugefügten, modifizierten oder unterdrückten künftigen Ereignisses im Kalenderserver (CAL) vor dem Eintreten des erkannten künftigen Ereignisses;
- Ausführen einer Aktion (6), die dem enthaltenen Stichwort zugehörig ist, was folgende Schritte umfasst:
-- Abrufen der Identität von wenigstens einer Anwendung (AP1, ...) und der zum Modifizieren des Kontexts dieser Anwendung ausgebildeten Daten, die dem enthaltenen Stichwort zugehörig sind;
-- und dann Senden (10, 11) von Meldungen an die wenigstens eine identifizierte Anwendung vor dem Eintreten des erkannten künftigen Ereignisses, wobei die Meldung die zum Modifizieren des Kontexts dieser Anmeldung ausgebildeten Daten umfasst.

## Revendications

1. Système pour modifier les contextes d'applications en fonction d'événements planifiés futurs, comprenant :
- des moyens (PRS, CAC) pour sélectionner (1, 2, 3) un événement dans un serveur de calendrier (CAL) stockant des descriptions d'événement,
- un dictionnaire (DIC) mémorisant des mots-clés qui peuvent être détectés dans une description d'événement, et des actions associées respectivement aux mots-clés mémorisés ;
- des moyens (PRS) pour recevoir (4), en provenance du calendrier (CAC), la description de l'événement sélectionné ;
- des moyens (PRS) pour comparer (5) chaque description d'événement reçue avec les mots-clés stockés dans le dictionnaire (DIC) ;
- et des moyens pour, si au moins un de ces mots-clés est contenu dans une description d'événement reçue, effectuer une action (6) associée au mot-clé contenu ;
**caractérisé en ce que**
- le dictionnaire (DIC) comprend des moyens pour mémoriser, respectivement en association avec chaque mot-clé mémorisé, l'identité (AP1, ...) d'une application et des données adaptées pour modifier le contexte de cette application ;
- les moyens pour sélectionner un événement dans le serveur de calendrier (CAL) comprennent des moyens pour détecter (1, 2, 3) un événement futur ajouté, modifié ou supprimé dans ledit serveur de calendrier (CAL), avant la survenue de l'événement futur détecté ;
- les moyens pour effectuer une action (6) associée au mot-clé contenu comprennent :
-- des moyens pour récupérer, dans le dictionnaire (DIC), l'identité d'au moins une application (AP1, ...) et les données adaptées pour modifier le contexte de cette application, associées au mot-clé contenu ;
-- et des moyens (PRS, NTS) pour envoyer (10, 11) des notifications, avant la survenue de l'événement futur détecté, à l'application dont l'identité a été récupérée, cette notification comprenant les données adaptées pour modifier le contexte de cette application.

2. Système selon la revendication 1, **caractérisé en ce que** lesdits moyens (PRS, CAC) pour détecter un événement futur ajouté, modifié ou supprimé dans un serveur de calendrier (CAL) stockant des descriptions d'événement, comprennent des moyens pour s'abonner au serveur de calendrier (CAL) de sorte que ce dernier envoie spontanément un message chaque fois qu'un événement est ajouté, modifié ou supprimé dans le calendrier.

3. Système selon la revendication 1, **caractérisé en ce que** lesdits moyens (PRS, CAC) pour détecter un événement futur ajouté, modifié ou supprimé dans un serveur de calendrier (CAL) stockant des descriptions d'événement, comprennent des moyens pour commander périodiquement le connecteur de calendrier (CAC) de sorte qu'il réalise un audit dans le serveur de calendrier (CAL) pour détecter chaque événement futur ajouté, modifié ou supprimé enregistré dans le calendrier (CAL).

4. Système selon la revendication 1, **caractérisé en ce qu'**il comprend en outre :
- des moyens (PRS) pour comparer (5) chaque description d'événement reçue avec les mots-clés stockés dans le dictionnaire (DIC), avant la survenue de l'événement futur détecté, et déterminer ainsi l'identité d'au moins une application à télécharger et des données adaptées pour la sélectionner dans un magasin d'applications, et la télécharger ;
- et des moyens (NTS) pour télécharger et installer l'application identifiée, avant la survenue de l'événement futur détecté.

5. Système selon la revendication 1, **caractérisé en ce qu'**il comprend en outre des moyens (PRS) pour interroger (8, 9) un utilisateur concerné pour confirmer que cet utilisateur concerné permet la modification du contexte d'une application, avant d'envoyer (11) une notification à cette application si l'utilisateur a autorisé la modification.

6. Support de stockage de données numérique comprenant des instructions exécutables par ordinateur qui, lorsque le programme est exécuté sur un ordinateur, amènent l'ordinateur à effectuer toutes les étapes de procédé suivantes :
- mémoriser, dans un dictionnaire (DIC), des mots-clés qui peuvent être détectés dans une description d'événement ;
- sélectionner (1, 2, 3) un événement dans un serveur de calendrier (CAL) stockant des descriptions d'événement ;
- recevoir (4), en provenance du calendrier (CAC), la description de l'événement sélectionné ;
- comparer (5) chaque description d'événement reçue avec les mots-clés stockés dans le dictionnaire (DIC) ;
- et si une description d'événement reçue contient au moins un des mots-clés stockés, effectuer une action (6) associée au mot-clé contenu ;
**caractérisé en ce que** ces instructions effectuent en outre les étapes suivantes :
- associer, à chaque mot-clé mémorisé dans le dictionnaire (DIC), l'identité (AP1, ...) d'une application et des données adaptées pour modifier le contexte de cette application afin d'adapter son contexte à l'ajout, la modification ou la suppression dudit événement ;
- sélectionner (1, 2, 3) un événement, dans le serveur de calendrier (CAL), en détectant (1, 2, 3) un événement futur ajouté, modifié ou supprimé dans ledit serveur de calendrier (CAL), avant la survenue de l'événement futur détecté ;
- effectuer une action (6) associée au mot-clé contenu, comprend l'étape suivante :
-- récupérer l'identité d'au moins une application (AP1, ...) et les données adaptées pour modifier le contexte de cette application, associées au mot-clé contenu ;
-- et envoyer ensuite (10, 11) des notifications à la au moins une application identifiée, avant la survenue de l'événement détecté, cette notification comprenant les données adaptées pour modifier le contexte de cette application.

7. Produit de programme d'ordinateur comprenant des instructions exécutables par ordinateur qui, lorsque le programme est exécuté sur un ordinateur, amènent l'ordinateur à effectuer toutes les étapes de procédé suivantes :
- mémoriser, dans un dictionnaire (DIC), des mots-clés qui peuvent être détectés dans une description d'événement ;
- sélectionner (1, 2, 3) un événement dans un serveur de calendrier (CAL) stockant des descriptions d'événement ;
- recevoir (4), en provenance du calendrier (CAC), la description de l'événement sélectionné ;
- comparer (5) chaque description d'événement reçue avec les mots-clés stockés dans le dictionnaire (DIC) ;
- et si une description d'événement reçue contient au moins un des mots-clés stockés, effectuer une action (6) associée au mot-clé contenu ;
**caractérisé en ce que** ces instructions effectuent en outre les étapes suivantes :
- associer, à chaque mot-clé mémorisé dans le dictionnaire (DIC), l'identité (AP1, ...) d'une application et des données adaptées pour modifier le contexte de cette application afin d'adapter son contexte à l'ajout, la modification ou la suppression dudit événement ;
- sélectionner (1, 2, 3) un événement, dans le serveur de calendrier (CAL), en détectant (1, 2, 3) un événement futur ajouté, modifié ou supprimé dans ledit serveur de calendrier (CAL), avant la survenue de l'événement futur détecté ;
- effectuer une action (6) associée au mot-clé contenu, comprend l'étape suivante :
-- récupérer l'identité d'au moins une application (AP1, ...) et les données adaptées pour modifier le contexte de cette application, associées au mot-clé contenu ;
-- et envoyer ensuite (10, 11) des notifications à la au moins une application identifiée, avant la survenue de l'événement détecté, cette notification comprenant les données adaptées pour modifier le contexte de cette application.
